# EUROPÄISCHE PATENTANMELDUNG

(11) **EP 1 133 198 A2**
(43) Veröffentlichungstag der Anmeldung: **12.09.2001**
(21) Anmeldenummer: 01100673.1
(22) Anmeldetag: 11.01.2001
(51) Int. Cl.: H04Q 3/545

(54) **Kommunikationsmodul für den Busbetrieb sowie System mit mehreren Kommunikationsmodulen**

(30) Priorität: 08.03.2000 DE 10011267
(71) Anmelder: Tenovis GmbH & Co. KG, 60362 Frankfurt am Main (DE)
(72) Erfinder: Maier, Klaus, 61231 Bad Nauheim (DE); Eli, Bernhard, 65428 Rüsselsheim (DE); Zodel, Wolfgang, 60316 Frankfurt (DE); Joch, Michael, 63303 Dreieich (DE); Dardat, Wolfgang, 34593 Knüllwald (DE); Hirt, Manfred, 65527 Niedernhausen (DE)
(74) Vertreter: Bohnenberger, Johannes, Dr.

(57) **Zusammenfassung**

Mehrere Teilmodule (MTU1, MTU2) bilden jeweils ein Kommunikationsmodul. Über Busschnittstellen (CBI) können Informationen zwischen den Teilmodulen über einen Bus (BU) ausgetauscht werden. Bei Defekt übernimmt das im Bereitschaftsparallelbetrieb mitlaufend Teilmodul (MTU2) die Aufgaben des defekten Teilmoduls (MTU1). Die Umschaltung erfolgt ohne Betriebsunterbrechungen.

## Beschreibung

### Stand der Technik

Die Erfindung geht aus von einem Kommunikationsmodul für den Busbetrieb.

Aus der DE 19737359 C2 ist eine Kommunikationseinrichtung bekannt mit einer zentralen Koppelanordnung (Schaltmatrix) und Leitungsbaugruppen über die Übertragungsleitungen an die Koppelanordnung schaltbar sind. Für eine Anzahl von N Leitungsbaugruppen steht eine zusätzliche Ersatz-Leitungsbaugruppe zur Verfügung. Über Selektionsmittel und Schaltmittel erfolgt die Auswahl der Schaltwege.

### Vorteile der Erfindung

Mit den Massnahmen nach Anspruch 1 ist es möglich innerhalb einer Vermittlungsanlage den Betrieb weiter aufrecht zu erhalten, wenn ein Teilmodul ausfällt oder einen Fehler aufweist. Bis auf eine eventuell kurze Störung während der Umschaltung entsteht keine Beeinträchtigung. Die zum Zeitpunkt des Auftretens eines Fehlers existierenden Verbindungen (Gespräche, Daten) gehen dabei nicht verloren.

Bei einer Umschaltung der Vermittlungsfunktionen von einem als aktiver Busteilnehmer geschalteten Teilmodul auf ein bisher als passiver Busteilnehmer geschaltetes Teilmodul kann ein defektes Teilmodul ohne Systemstörung entfernt bzw. ausgetauscht werden.

Bei der Ausgestaltung nach Anspruch 2 werden durch den Bereitschaftsparallelbetrieb Funktionen des aktiven Busteilnehmers vom passiven Busteilnehmer synchron nachgeführt, d.h. insbesondere die Schaltmatrix-Einstellungen. Dadurch können bestehende Verbindungen ohne Störungen weiter aufrecht erhalten werden, was insbesondere vorteilhaft ist für Standleitungsverbindungen.

Gemäss Anspruch 3 wird nach einem Austausch eines defekten Teilmoduls dafür gesorgt, dass das getauschte Teilmodul für den Bereitschaftparallebetrieb arbeiten kann, d.h. zur Übernahme der Funktionen bei Defekt des aktiven Busteilnehmers zur Verfügung steht.

Bei der Ausgestaltung nach Anspruch 4 wird von der Modulsteuerung des Teilmoduls, bei dem ein Ausfall oder Fehler aufgetreten ist, eine Fehlermeldung abgesetzt.

Gemäss Anspruch 5 besteht die Umschalteinrichtung für die Übergabe der Vermittlungsfunktionen an das redundante Teilmodul aus steuerbaren Bustreibern, die durch einen Steuerbefehl gleichzeitig aktiviert werden können und so ein Datentausch über den Bus sofort ermöglicht wird.

Nach Anspruch 6 kann bei Auftreten eines Fehlers oder Ausfalls eine Signalisierung generiert werden, um eine Anzeigeeinrichtung zu steuern und/oder einer Zentrale ein defektes Teilmodul zu melden. Daraufhin kann vom Servicepersonal dieses defekte Teilmodul während des Systembetriebs störungsfrei getauscht werden.

Wenn gemäss Anspruch 7 die Fehlermeldung eine Information über den Fehlertyp enthält, kann die Art der Umschaltung auf einfache Weise dokumentiert werden, beispielsweise wie in den Ansprüchen 8 und 9 aufgeführt hardware- oder softwaremässig, je nachdem, ob eine schnelle Reaktion erforderlich ist oder nicht.

Gemäss Anspruch 10 wird auch ein Teilmodul im Bereitschaftsparallelbetrieb überwacht, denn wenn dieses auch auszufallen droht, muss vom Servicepersonal sofort reagiert werden können, da sonst eventuell bei Umschaltung im Fehlerfall die Vermittlungsfunktionen entweder gar nicht mehr oder nur noch eingeschränkt ausführbar sind.

Die Massnahmen des Anspruchs 11 gestatten einen einfachen Service oder eine Wartung. Das jeweils passiv geschaltete Teilmodul kann entfernt werden, z.B für einen Softwaretausch der Modul-Steuerung oder Download für Schaltmatrix-, Töne-und/oder Sprachansagen-Software.

Die Erfindung eignet sich auch insbesondere für den modularen Auf- oder Ausbau, bei dem mindestens zwei Kommunikationsmodule in einem System miteinander arbeiten und zusammen eine Vermittlungseinrichtung, z.B. eine PABX, bilden. Insbesondere mit den Massnahmen nach Anspruch 12 oder 17 ist in einem solchen System eine erhöhte Ausfallsicherheit gegeben. Die Massnahmen nach Anspruch 12 ermöglichen modulübergreifende Verbindungen auch bei Ausfall einer weiteren Schnittstelle sowie der zugehörigen bidirektionalen Leitungen zwischen zwei Kommunikationsmodulen. Besonders wichtig ist dies bei Teilmodulen, die sogenannte Ladegruppen enthalten, d.h. mit Hintergrundspeichern ausgestattet sind, die anlagensoftware-spezifisch nur einmal im Vermittlungssystem vorkommen.

Die Massnahmen des Anspruchs 16 verhindern Doppelreaktionen der Teilmodule beim Umschalten und vermeiden damit eventuelle Fehlumschaltungen (Überkreuz-Aktivitäten).

Mit den Massnahmen des Anspruchs 13 werden kommunikationsmodulübergreifend die jeweils bisher passiven Busteilnehmer zu aktiven Busteilnehmern. Dies erhöht die Zuverlässigkeit und die Servicefreundlichkeit, da jeweils an gleichen Steckplätzen getauscht werden muss.

Bei einer defekten Leitung zwischen Kommunikationsmodulen ist es nach Anspruch 14 möglich sofort auf eine Ersatzleitung umschalten zu können, ohne Leitungen neu stecken zu müssen.

Die Massnahmen des Anspruchs 15 haben den Vorteil den Ausfall einer weiteren Schnittstelle über den Bus mitzuüberwachen und eine entsprechende Umschaltung auf ein Teilmodul mit intakter weiterer Schnittstelle zu veranlassen.

### Zeichnungen

Anhand der Zeichnungen werden Ausführungsbeispiele der Erfindung näher erläutert. Es zeigen
Fig.1 ein Kommunikationsmodul nach der Erfindung,
Fig.2 ein Kommunikationsmodul nach Umschaltung auf ein bisher als passiver Busteilnehmer geschaltetes Teilmodul,
Fig. 3 eine Zusammenschaltung zweier Kommunikationsmodule,
Fig. 4 die Zusammenschaltung zweier Kommunikationsmodule nach einer Umschaltung,
Fig. 5 die Zusammenschaltung des Kommunikationsmoduls mit einem weiteren Teilmodul.

### Beschreibung von Ausführungsbeispielen

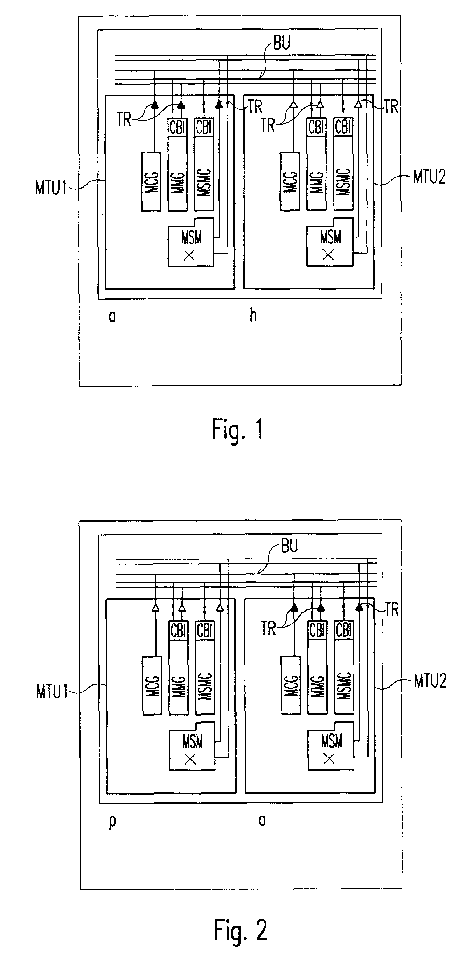

In Fig. 1 ist ein Kommunikationsmodul nach der Erfindung dargestellt, welches in Vermittlungsanlagen einsetzbar ist. Dieses Kommunikationsmodul besteht aus zwei gleichartigen Teilmodulen MTU1 und MTU2. Jedes dieser Teilmodule weist folgende Funktionseinheiten auf:
- eine Taktaufbereitung MCG (module clock generation),
- eine Schaltmatrix MSM (module switching matrix), d.h. ein Koppelfeld,
- eine Steuereinrichtung MSMC (module switching matrix control) für die Schaltmatrix,
- eine Modul-Steuerung MMG (module manager),
- Busschnittstellen CBI für vorgenannte Baugruppen,
- Umschalteinrichtungen TR über die steuerbar ist, ob ein jeweiliges Teilmodul aktiver oder passiver Busteilnehmer für den Bus BU ist.

Fällt in einem solchen Teilmodul eine Baugruppe aus oder ist fehlerhaft, so ist dies gleichbedeutend mit dem Ausfall des gesamten Teilmoduls. Da jedoch in einem Kommunikationsmodul zwei Teilmodule MTU1 und MTU2 vorgesehen sind, wovon eines als aktiver Busteilnehmer MTU1 geschaltet ist (in den Figuren jeweils mit a bezeichnet), kann auf das zweite Teilmodul MTU2 umgeschaltet werden, das im Bereitschaftsparallelbtrieb arbeitet ("hot standby" in den Figuren jeweils mit h bezeichnet) und Funktionen des Teilmoduls MTU1 bei seinen entsprechenden Einrichtungen immer synchron einstellt. Die Nachführung der Einstellungen (Abgleich) bei der Inbetriebnahme der passiven MTU geschieht über einen Meldungstausch zwischen Teilmodul MTU1 und Teilmodul MTU2 über den Bus BU. Im gezeigten Ausführungsbeispiel nach Fig. 1 ist das Teilmodul MTU1 im Normalbetrieb der aktive Busteilnehmer, dies kann beispielsweise über eine Steckplatzcodierung eingestellt werden. Seine Bustreiber TR sind aktiv geschaltet, erkenntlich an den in Fig. 1 schwarz ausgefüllten Bustreibern (3 State Driver enabled). Bei Auftreten eines Ausfalls oder eines Fehlers gibt das Teilmodul MTU1 über seine Modul-Steuerung MMG eine Umschaltemeldung auf den Bus ab, um der Modul-Steuerung MMG des Teilmoduls MTU2 mitzuteilen seine Bustreiber TR aktiv zu schalten und die Funktion des Teilmoduls voll zu übernehmen. Danach werden die Bustreiber TR des Teilmoduls 1 deaktiviert ( 3 State Driver disabled; Fig. 2 nicht ausgefüllte Bustreiber TR). Nach einer Umschaltung sind demnach alle Funktionseinheiten des Teilmoduls MTU2 aktiv. Dies gilt sowohl bei laufendem Betrieb als auch während der Inbetriebnahme des Systems. Angesichts der hohen MTBF-Werte der einzelnen zentralen Teilfunktionseinheiten wird davon ausgegangen, dass es zu einem momentanen Zeitpunkt immer nur einen Fehler geben kann.

Das Vermittlungssystem bleibt bzw.geht also trotz eines Ausfalls, bis auf eine kurze Störung während des Umschaltvorgangs, weiterhin in Betrieb. Die bis zum Zeitpunkt des Fehlers existierenden Verbindungen (Gespräche, Daten) gehen dabei nicht verloren (identische Koppelmatrix-Einstellungen), was insbesondere vorteilhaft für Standleitungsverbindungen ist.

Mit dem Auftreten eines Fehlers oder Ausfalls ist auch eine Signalisierung generierbar, die im entsprechenden Teilmodul einer Anzeigeeinrichtung, z.B. Zustands-LED, zuführbar ist. Im Signalisierungsfall kann die defekte Baugruppe, bzw. das entsprechende Teilmodul, vom Service-Personal ohne Störung des Systems entfernt bzw. ausgetauscht werden. Eine Fehlermeldung wird auch zu einer Zentrale Z, z.B. einem Service-Center übermittelt (Lockruf).

In einer Fehlermeldung wird vorteilhafterweise auch der Fehlertyp mitgeteilt anhand dessen die Art der Umschaltung dokumentiert wird. Es kommen insbesondere zwei Arten der Umschaltung in Frage: eine sogenannte Hardware (HW)- und eine sogenannte Software(SW)-Umschaltung, je nachdem ob eine schnelle Reaktion erforderlich ist oder nicht. Bei einem Systemtaktausfall, z.B. 8 MHz Takt, ist eine schnelle Reaktion erforderlich, um den Systembetrieb aufrecht zu erhalten. In diesem Fall findet eine von der Modul-Steuerung MMG des als passiver Busteilnehmer geschalteteten Teilmoduls MTU2 gesteuerte HW-Umschaltung statt, die insbesondere die redundante Taktquelle innerhalb eines sehr kurzen Überwachungszeitraums "taktspritzerfrei" und pegelangepasst an die Verbraucher schalten muss. Alle anderen Ausfälle, wie beispielsweise die der Modul-Steuerung MMG, der Schaltmatrix MSM oder der Steuereinrichtung MSMC für die Schaltmatrix oder der Taktaufbereitung MCG (PLL-Fehler, Rahmentaktausfall etc.) sowie deren Hilfs- und Überwachungstakte, werden per Meldungstausch (MMG-Software) der beiden Modul-Steuerungen MMG kontrolliert und es erfolgt eine SW-Umschaltung. Auch in diesem Fall wird der Systemtakt pegelgenau umgeschaltet.

Auch das im Bereitschaftsparallelbetrieb arbeitende als passiver Busteilnehmer geschaltete Teilmodul MTU2 wird ständig überwacht und ein Ausfall gemeldet (Lockruf zur Zentrale), damit bei einem eventuellen Fehler des als aktiver Busteilnehmer geschalteten Teilmodul MTU1 die dann benötigte Redundanz auch wirklich vorhanden ist. Die Umschaltung auf eine defekte Redundanz wird verweigert.

Weiterhin ist es vorteihaft die Möglichkeit einer Service-Umschaltung vorzusehen. Dazu ist vorteilhafterweise auf der Frontleiste des Kommunkationsteilmoduls, insbesondere wenn es in einem Gestell untergebracht ist, ein lokaler Schalter untergebracht, mittels dessen über einen dann generierbaren Steuerbefehl ein jeweils passives Teilmodul beispielsweise für Service- oder Wartungszwecke störungsfrei aus dem System entfernt werden kann, z.B. für den Austausch der Modul-Steuerungssoftware oder einen Download für Schaltmatrix (Koppelfeld)-, Töne- und Sprachansagen-Software. Diese Service-Umschaltung kann auch über ein Fernwirksignal aktiviert werden oder über ein Systemterminal.

Nach dem Austausch eines defekten Teilmoduls geht das getauschte Teilmodul "passiv" in Betrieb und erhält die Einstellungen des aktiven Busteilnehmers, insbesondere dessen Schaltmatrix-Einstellungen, um für das aktive Teilmodul den Bereitschatsparallelbetrieb ("hot standby") aufzunehmen.

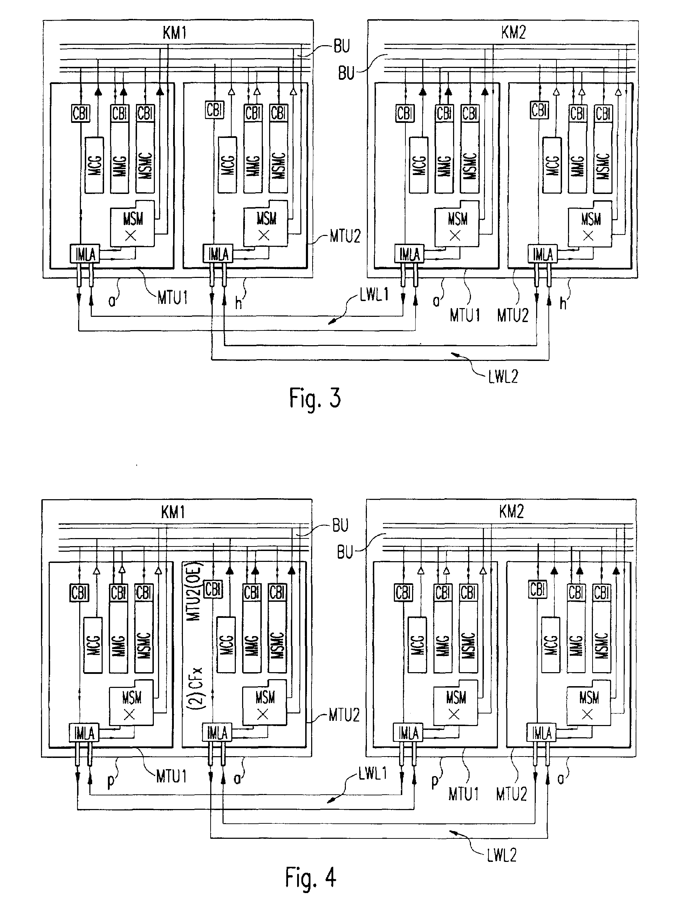

Kommunikationsmodule nach der Erfindung können mit weiteren gleichartig aufgebauten Kommunikationsmodulen zu einem System zusammengeschaltet werden, um gemeinsam eine Vermittlungseinrichtung zu bilden. So ist beispielsweise in Fig.3 eine als Twin-Modul bezeichnete Konfiguration dargestellt, bei der zwei wie zuvor geschildert aufgebaute Kommunikationsmodule KM1 und KM2 über bidirektionale Leitungen LWL1 und LWL2, insbesondere Lichtwellenleiter, so miteinander verbunden sind, dass bei Auftreten eines Fehlers oder bei einem Ausfall eine Gesamtumschaltung auf die bisher als passive Busteilnehmer geschalteten Teilmodule erfolgt. Es erfolgt also stets eine Umschaltung auf beide zuvor als passive Busteilnehmer geschalteten Teilmodule, selbst wenn bei einem als aktiver Busteilnehmer geschalteten Teilmodul kein Defekt vorliegt. Die Kommunikationsmodule KM1 und KM2 bzw. ihre jeweiligen Teilmodule MTU1 und MTU2 besitzen neben den zuvor behandelten Baugruppen: Taktaufbereitung MCG, Schaltmatrix MSM, Steuereinrichtung MSMC für die Schaltmatrix, Modul-Steuerung MMG, Busschnittstellen CBI sowie den Umschalteinrichtungen TR für ihre Zusammenschaltung als Twin-Modul jeweils eine weitere Schnittstelle IMLA (inter module link adapter) zwischen denen die bidirektionalen Leitungen LWL1 und LWL2 vorgesehen sind. Über die bidirektionalen Leitungen sind immer einander entsprechende Teilmodule unterschiedlicher Kommunikationsmodule KM1 und KM2 verbunden, also jeweils die als aktive Busteilnehmer geschalteten Teilmodule und die jeweils als passive Busteilnehmer geschalteten Teilmodule. Bei nichtredundanten Lösungen in Twin-Konfigurierung bedeutete ein Ausfall der Teilfunktionseinheiten MMG, MSM, MCG immer einen Ausfall des gesamten Teilmoduls. Das jeweils andere Teilmodul läuft weiter bzw. bedingt weiter, je nachdem , ob es sich dabei um das Teilmodul mit einem Hintergrundspeicher HGS handelt oder nicht. Das Modul mit einem Hintergrundspeicher beinhaltet die sogenannte Ladegruppe, welche normalerweise anlagensoftware-spezifisch nur einmal im Vermittlungssystem vorgesehen ist. Beim Ausfall der weiteren Schnittstellen IMLA oder der bidirektionalen Leitungen wären dann, im Gegensatz zu den Massnahmen der Erfindung keine modulübergreifenden Verbindungen möglich. Die zum Zeitpunkt eines Fehlers existierenden vermittlungstechnischen Verbidungen wären zerstört. Die beiden Kommunikationsmodule würden getrennt voneinander weiterlaufen. Unabhängig von der Art eines Ausfalls wäre nach erfolgter Reparatur des defekten Teilmoduls oder einer bidirektionalen Leitung ein Systemrestart unvermeidbar, der bei der Erfindung nicht notwendig ist.

Bei der Inbetriebnahme der erfindungsgemässen Twin-Konfiguration ist standardmässig eine "aktive Systemhälfte" vordefiniert, beispielsweise per Steckplatz-Codierung, die sich aus der jeweils aktiven MTU der beiden Kommunikationsmodule KM1 und KM2 und der LWL- Strecke LWL1 zusammensetzt, während die gedoppelten Komponenten die "Hot-Standby-Seite" bilden.

Bei Ausfall oder Defekt einer Teilfunktionseinheit in einem Teilmodul auf der aktiven Systemhälfte, kommt es durch entsprechende Überwachungs- und Umschalteinrichtungen zur Gesamtumschaltung auf die Hot-Standby-Seite, deren Teilfunktionseinheiten somit komplett aktiv werden. Wie Fig.4 zeigt werden aus den vorher aktiven (a) Teilmodulen passive (p) Teilmodule und aus den vorher hot-standby (h) Teilmodulen aktive (a) Teilmodule. Zur Überwachung und Umschaltung wird auf die vorherigen Ausführungen zur "Single-Konfiguration" verwiesen. Zusätzlich wird bei der "Twin-Konfiguration" aber noch per Meldungstausch der beteiligten Modul-Steuerungen MMG einer Systemhälfte dafür gesorgt, dass auch das andere, fehlerfreie Modul die Umschaltung nachvollzieht.

Die weiteren Schnittstellen IMLA der Teilmodule MTU1 und MTU2 sind einerseits mit den jeweiligen Schaltmatrizen MSM als auch mit einer Busschnittstelle CBI verbunden, damit sowohl sie als auch ihre angeschlossenen Leitungen LWL1, LWL2 auf Ausfall hin über den Bus BU überwacht werden können. Beim Ausfall der aktiven LWL-Strecke, den grundsätzlich beide Modul-Steuerungen MMG erkennen, wird der Umschaltvorgang von der Modul-Steuerung MMG des als aktiver Busteilnehmer geschalteten Teilmoduls MTU1 im Kommunikationsmodul KM1 koordiniert, um Doppelreaktionen und daraus eventuell resultierende Fehlumschaltungen zu vermeiden (Überkreuz-Aktivität). Gleichzeitig wird von der jeweiligen Modul-Steuerung MMG eine den Umschaltegrund beinhaltende Fehlermeldung abgesetzt, wodurch ein Lockruf zum Service-Center initiiert wird. Das zuvor aktive Teilmodul bzw. LWL-Strecke ist auf der passiven Seite, was durch Zustands-LEDs angezeigt wird, und kann vom Service-Personal ohne Störung des Vermittlungssystems entfernt bzw. ausgetauscht werden.

Auch die Hot-Standby-Seite wird ständig überwacht und der Ausfall eines ihrer Komponenten gemeldet (Lockruf), damit bei einem eventuellen Fehler der aktiven Systemhälfte die dann benötigte Redundanz auch wirklich vorhanden ist. Die Umschaltung auf eine defekte Redundanz wird verweigert. Auch die Service-Umschaltung ist wie zuvor geschildert möglich.

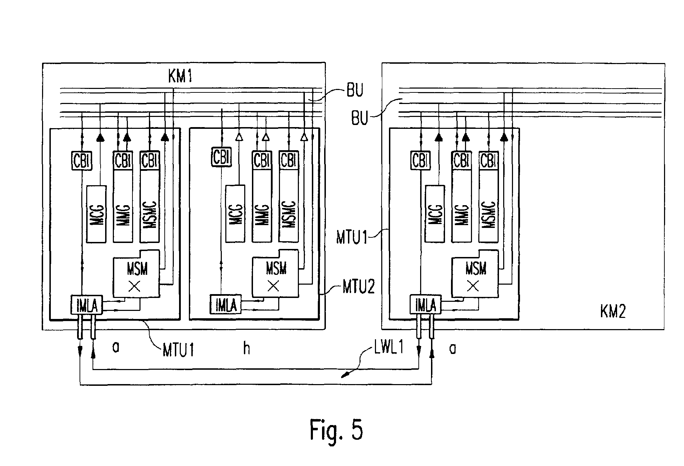

Gedoppelte Teilmodule sind auch mit ungedoppelten Teilmodulen zu einer Twin-Konfigurierung schaltbar. Dieses Ausführungsbeispiel zeigt Fig. 5. Die beiden Teilmodule MTU1 und MTU2 bilden das Kommunikationsmodul KM1. Das Teilmodul MTU1 des Kommunikationsmoduls KM2 ist mit dem Kommunikationsmodul KM1 über die zwischen den weiteren Schnittstellen IMLA angeschlossene Leitung LWL1 verbunden.

Die Konfigurierung nach Fig. 5 kommt insbesondere dann zum Einsatz, wo nur ein Anlagenteil die erhöhte Sicherheit benötigt. Im Gegensatz zur komplett ungedoppelten Twin-Konfigurierung bleibt das gedoppelte Kommunikationsmodul KM1 bei Ausfall des als aktiver Busteilnehmer geschalteten Teilmodul MTU1 weiterhin lauffähig. Die aufgebauten Verbindungen innerhalb der Kommunikationsmodule KM1 und KM2 bleiben wie zuvor ausgeführt erhalten.

## Patentansprüche

1. Kommunikationsmodul für den Busbetrieb bestehend aus mindestens zwei gleichartigen Teilmodulen (MTU1, MTU2), die jeweils folgende Funktionseinheiten umfassen:
- eine Taktaufbereitung (MCG),
- eine Schaltmatrix (MSM),
- eine Steuereinrichtung (MSMC) für die Schaltmatrix,
- eine Modul-Steuerung (MMG),
- Busschnittstellen (CBI) für vorgenannte Baugruppen zum Austausch von Informationen zwischen mindestens zwei Teilmodulen (MTU1, MTU2) über einen Bus,
- Umschalteinrichtungen (TR) über die steuerbar ist, ob ein jeweiliges Teilmodul aktiver oder passiver Busteilnehmer ist.

2. Kommunikationsmodul nach Anspruch 1, **dadurch gekennzeichnet, dass** ein als passiver Busteilnehmer geschaltetes Teilmodul (MTU2) vorgesehen ist im Bereitschaftsparallelbetrieb zu arbeiten, d.h. dass es Funktionen des als aktiver Busteilnehmer geschalteten Teilmoduls (MTU1), z.B. die Schaltmatrix-Einstellungen, bei seinen entsprechenden Einrichtungen synchron einstellt.

3. Kommunikationsmodul nach Anspruch 1 oder 2, **dadurch gekennzeichnet, dass** ein Teilmodul (MTU1, MTU2) eingerichtet ist nach dem Austausch gegen ein defektes Teilmodul als passiver Busteilnehmer den Betrieb aufzunehmen und die Einstellungen seines zugehörigen aktiven Busteilnehmers insbesondere hinsichtlich der Schaltmatrix-Einstellungen zu übernehmen, damit es als Teilmodul für den Bereitschaftsparallelbetrieb arbeiten kann.

4. Kommunikationsmodul nach einem der Ansprüche 1 bis 3, **dadurch gekennzeichnet, dass** ein Teilmodul (MTU1) eingerichtet ist, bei Auftreten eines Fehlers oder eines Ausfalls über seine Modul-Steuerung (MMG) eine Umschaltemeldung abzugeben, um ein als passiver Busteilnehmer geschaltetes Teilmodul (MTU2) anhand der über den Bus übertragenen Umschaltemeldung, insbesondere über seine Modul-Steuerung (MMG), als aktiven Busteilnehmer zu schalten.

5. Kommunikationsmodul nach einem der Ansprüche 1 bis 4, **dadurch gekennzeichnet, dass** eine Umschalteinrichtung (TR) aus einem steuerbaren Bustreiber besteht, der jeweils zwischen einer Modul-Baugruppe und dem Bus (BU) angeordnet ist.

6. Kommunikationsmodul nach einem der Ansprüche 1 bis 5, **dadurch gekennzeichnet, dass** bei Auftreten eines Fehlers oder eines Ausfalls in einem Teilmodul (MTU1) eine Signalisierung generierbar ist, die im entsprechenden Teilmodul (MTU1) einer Anzeigeeinrichtung (AZ) zuführbar ist und/oder einer Zentrale (Z) insbesondere zusammen mit einer Fehlermeldung übermittelbar ist.

7. Kommunikationsmodul nach einem der Ansprüche 4 bis 6, **dadurch gekennzeichnet, dass** eine Fehlermeldung eine Information über den Fehlertyp enthält, anhand derer die Art einer Umschaltung dokumentiert wird.

8. Kommunikationsmodul nach Anspruch 7, **dadurch gekennzeichnet, dass** bei Fehlerereignissen, die eine schnelle Reaktion erfordern, z.B. einem Systemtaktausfall, eine vom als passiver Busteilnehmer geschalteten Teilmodul (MTU2) gesteuerte Hardware-Umschaltung ausführbar ist.

9. Kommunikationsmodul nach Anspruch 7, **dadurch gekennzeichnet, dass** bei Fehlerereignissen, die keine unmittelbare Reaktion erfordern, eine Umschaltung über einen Meldungstausch zwischen den Teilmodulen, insbesondere zwischen deren Modul-Steuerungen (MMG) softwaremässig ausführbar ist.

10. Kommunikationsmodul nach einem der Ansprüche 3 bis 9, **dadurch gekennzeichnet, dass** ein im Bereitschaftsparallelbetrieb arbeitendes als passiver Busteilnehmer geschaltetes Teilmodul (MTU2) auf Auftreten eines Fehlers oder Ausfalls hin überwacht wird, um gegebenenfalls eine Fehlermeldung insbesondere an eine Zentrale (Z) abzugeben.

11. Kommunikationsmodul nach einem der Ansprüche 1 bis 10, **dadurch gekennzeichnet, dass** die Teilmodule eingerichtet sind über einen äusseren Steuerbefehl eine Service-Umschaltung vom aktiven in den passiven Betrieb auszuführen, wobei ein solcher Steuerbefehl durch einen einem Teilmodul lokal zugeordneten Schalter oder durch ein Fernwirksignal oder von einem Systemterminal aus generierbar ist.

12. System bestehend aus mindestens zwei Kommunikationsmodulen nach einem der Ansprüche 1 bis 11, **dadurch gekennzeichnet, dass** die Teilmodule (MTU1, MTU2) jeweils eine weitere Schnittstelle (IMLA) aufweisen und dass bidirektionale Leitungen (LWL1, LWL2) zwischen den weiteren Schnittstellen einander entsprechender Teilmodule unterschiedlicher Kommunikationsmodule (KM1, KM2) vorgesehen sind.

13. System nach Anspruch 12, **dadurch gekennzeichnet, dass** bei Auftreten eines Fehlers oder Ausfalls in einem als aktiver Busteilnehmer geschalteten Teilmodul (MTU1) nicht nur in diesem Kommunikationsmodul (KM1) eine Umschaltung des bisher als passiver Busteilnehmer geschalteten Teilmodul (MTU2) zu einem aktiven Busteilnehmer erfolgt, sondern auch in einem zweiten Kommunikationsmodul (KM2), selbst wenn dort bei dem als aktiver Busteilnehmer geschalteten Teilmodul (MTU1) kein Ausfall oder Fehler auftritt.

14. System nach Anspruch 13, **dadurch gekennzeichnet, dass** die Umschaltung auch dann erfolgt, wenn bei einer der bidirektionalen Leitungen (LWL1, LWL2) und/oder einer der weiteren Schnittstellen (IMLA) ein Fehler bzw. Ausfall auftritt.

15. System nach einem der Ansprüche 12 bis 14, **dadurch gekennzeichnet, dass** eine weitere Schnittstelle (IMLA) einerseits mit der Schaltmatrix (MSM) ihres Teilmoduls als auch mit einer Busschnittstelle (BSI) verbunden ist.

16. System nach einem der Ansprüche 13 bis 15, **dadurch gekennzeichnet, dass** bei Ausfall einer bidirektionalen Leitung (LWL1) die Umschaltung auf eine weitere bidirektionale Leitung (LWL2) sowie auf die damit verbundenen im Bereitschaftsparallelbetrieb arbeitenden Teilmodule von der Modulsteuerung (MMG) des als aktiver Busteilnehmer geschalteten Teilmoduls koordiniert wird.

17. System bestehend aus mindestens einem Kommunikationsmodul mit mindestens zwei Teilmodulen nach einem der Ansprüche 1 bis 11 sowie einem weiteren Teilmodul, **dadurch gekennzeichnet, dass** die Teilmodule (MTU1, MTU2) jeweils eine weitere Schnittstelle (IMLA) aufweisen und dass eine'bidirektionale Leitung (LWL1) zwischen dem als aktiver Busteilnehmer geschalteten Teilmodul (MTU1) des einen Kommunikationsmoduls (KM1) und der weiteren Schnittstelle (IMLA) des weiteren Teilmoduls (MTU1) in einem weiteren Kommunikationsmodul (KM2) vorgesehen ist.
